# EUROPÄISCHE PATENTSCHRIFT

(11) **EP 0 504 588 B1**
(45) Veröffentlichungstag und Bekanntmachung des Hinweises auf die Patenterteilung: **17.11.1994**
(21) Anmeldenummer: 92102475.8
(22) Anmeldetag: 14.02.1992
(51) Int. Cl.: B60R 9/045

(54) **Abdeckkappenanordnung am Querträger eines Dachgepäckträgers**
Cap device for a roof rack transversal bar
Dispositif capuchon pour transverses de galeries de toit

(30) Priorität: 16.03.1991 DE 4108656
(43) Veröffentlichungstag der Anmeldung: 23.09.1992
(73) Patentinhaber: VOTEX GmbH, D-63303 Dreieich (DE)
(72) Erfinder: Dümmler, Stephan, Dipl.-Ing., W-6074 Rödermark (DE)
(74) Vertreter: Neubauer, Hans-Jürgen, Dipl.-Phys.

(56) Entgegenhaltungen:
- EP-A- 0 205 414
- EP-A- 0 338 633
- DE-A- 3 104 163

## Beschreibung

Die Erfindung betrifft eine Abdeckkappenanordnung am Querträger eines Dachgepäckträgers an einem Fahrzeug zur absperrbaren Abdeckung der jeweiligen Profilstirnseite nach dem Oberbegriff des Anspruchs 1.

Dachgepäckträger bestehen üblicherweise aus quer oberhalb des Daches angeordneten Querträgern, die über Stützfüße seitlich am Dach gehalten und abgestützt sind. Bei herkömmlichen Fahrzeugen sind die Stützfüße mit Spannklammern an den Dachregenrinnen befestigt. Bei modernen, aeordynamisch optimierten Fahrzeugen sind keine Dachregenrinnen vorhanden, wodurch andere und aufwendigere Konstruktionen mit Abstützplatten und Spannklammern nach Art einer Zange erforderlich sind (DE-OS 34 06 431). Weiter sind Fahrzeuge, insbesondere Kombifahrzeuge und Geländefahrzeuge, mit einer Dachreling, bestehend aus je einem seitlich am Dach in Längsrichtung verlaufenden Relingrohr bekannt. Dachgepäckträger bestehen auch hier aus Querträgern, die mit den Relingrohren über Spanneinrichtungen verbunden sind.

Alle diese Dachgepäckträgerausführungen enthalten Querträger als Hohlprofile, die unterschiedliche Querschnittsformen haben können und üblicherweise einen nach oben offenen Längskanal mit Hinterschneidungen zur Aufnahme von Gummiprofilen und/oder Anbauteilen umfassen.

Die Stirnseiten der Querträger werden üblicherweise durch Abdeckkappen abgedeckt, da sich ohne Abdeckung in den offenen Profilen Schmutz fangen würde, ebenso wie der Fahrtwind, der zu unangenehmen Pfeifgeräuschen führen würde.

Als einfache, bekannte Abdeckung einer Querträgerstirnseite eines Rechteckprofils (DE-PS 35 16 483) ist lediglich ein Stopfen stirnseitig aufgesteckt und eingeklipst.

Eine weiter bekannte Abdeckkappenanordnung (DE-PS 31 04 163) besteht aus einer stirnseitig in den Querträger formschlüssig einschiebbaren Sperrkappe, die sowohl die stirnseitige Einführöffnung des Längskanals als auch eine Spannschraube zur Befestigung des Querträgers an einem Relingrohr der Dachreling abdeckt. Die Sperrkappe wird nach Absperren des integrierten Schlosses gehalten, wobei ein Schloßriegel in eine entsprechende Abstützung am Querträger eingreift. Bei dieser Anordnung werden einerseits zum Schutz gegen Schmutz und gegen eine Geräuschbildung die Profilstirnseite abgedeckt und zugleich als Diebstahlschutz die Einführöffnung am Längskanal und die Spannschraube zum Abnehmen des Querträgers gesichert. Nachteilig muß aber sowohl beim Wechseln von Anbauteilen, wie Fahrradträger, Bootsträger, etc., als auch bei der Montage des Querträgers durch die Spannschrauben die jeweilige Abdeckkappe ganz als separates Teil abgenommen werden. Dies erschwert die Handhabung und zudem besteht die Gefahr, daß die Abdeckkappe verloren geht.

In einer ähnlichen, bekannten Ausführungsform (DE-OS 32 23 216) ist eine Sperrkappe ebenfalls längsverschieblich in einem Querträgerprofil gehalten, wobei auch hier im eingeschobenen und versperrten Zustand die Einführöffnung in den Längskanal und eine Montage-Spannschraube abgedeckt und diebstahlgeschützt sind. Die Sperrkappe ist hierbei über eine lange, gebogene Blattfeder in verschiedenen Ausziehpositionen rastbar gehalten und dadurch mit dem Querträger verbunden. Die Ausführung ist jedoch in der Konstruktion aufwendig und bei robuster Handhabung kann die Sperrkappe offenbar trotz der Federanordnung aus dem Querträger herausgezogen werden.

Ausgehend von diesem Stand der Technik besteht die Aufgabe der Erfindung darin, eine Abdeckkappenanordnung am Querträger eines Dachgepäckträgers so weiterzubilden, daß diese bei einfacher Konstruktion und guter Funktionsfähigkeit unverlierbar gehalten und einfach handhabbar ist.

Diese Aufgabe wird mit den Merkmalen des Anspruchs 1 gelöst.

Nach Anspruch 1 umfaßt die erfindungsgemäße Abdeckkappenanordnung ebenfalls eine die Profilstirnseite des Querträgers abdeckende und von dieser wegbewegbare Sperrkappe. In dieser Sperrkappe ist ein Schloß angeordnet, das mit einem Schloßriegel eine mit dem Querträger fest verbundene Abstützung hintergreift. Erfindungsgemäß ist jeweils weiter ein Lagerteil verwendet, das mit dem Querträger verbunden ist. Die Sperrkappe mit dem integrierten Schloß und das Lager bilden dabei eine vormontierbare, zusammenhängende Montageeinheit. Dazu ist die Sperrkappe mit dem Lagerteil über ein Scharnier verbunden, wodurch die Sperrkappe vor die Stirnseite der Profilleiste bzw. von dieser weg klappbar ist.

Zur Befestigung des Lagerteils am Querträger enthält dieser in seinem Hohlprofil je einen an seiner Unterseite und in jedem Endbereich angeordneten, zur Stirnseite offenen Längsschlitz. Das Lagerteil enthält seitliche Längsnuten, mit denen es formschlüssig in den jeweils zugeordneten Längsschlitz in einem Bereich unter dem Längskanal eingeschoben ist, wobei die Längsränder des Längsschlitzes in die Längsnuten am Lagerteil eingreifen. Das Lagerteil ist gegen ein Herausziehen mit an sich bekannten Haltemitteln, wie Stiften, Verschraubungen, Klebeverbindungen, etc., gehalten.

Vorteilhaft ist die Einheit aus der Sperrkappe mit Schloß und dem gelenkig damit verbundenen Lagerteil vormontierbar. Diese Vormontageeinheit kann somit einschließlich des Schlosses unabhängig vom weiteren Dachträgeraufbau hergestellt werden und ist damit für unterschiedliche Dachgepäckträger, z.B. für unterschiedliche Fahrzeugtypen, verwendbar. Die Anbringung und Montage am Querträger ist durch die Halterung in Längsschlitzen schnell, einfach und kostengünstig durchführbar. Auch hier werden gegen Diebstahl die Einführöffnung des Längskanals und ggfs. Spannschrauben für Spanneinrichtungen abgedeckt und absperrbar gesichert. Die Abdeckkappe ist über die Scharnierverbindung mit dem Lagerteil und darüber mit dem Querträger unverlierbar verbunden. Durch die von der Stirnseite weg schwenkbare Lagerung der Sperrkappe wird der gesamte Stirnbereich zum Auswechseln von Anbaueinheiten oder zur Anbringung oder Abnahme des Dachgepäckträgers gut zugänglich.

Durch die mit Anspruch 2 angegebenen Führungsrippen an den Längsrändern des jeweiligen Längsschlitzes wird dieser Bereich insgesamt verstärkt. Bei größeren Traglasten treten auf das Profil des Querträgers Kippbelastungen auf, die eine Verwindung und Aufweitung im Bereich des Längsschlitzes herbeiführen können. Um dies zu verhindern, ist weiter vorgesehen, die Längsnuten am Lagerteil mit einem entsprechenden, negativen Längsnutenprofil auszustatten, das die Führungsrippen aufnimmt und diese übergreift, so daß der Längsschlitz auch bei Belastungen zusammengehalten wird.

Da das Lagerteil mit dem Quertrager fest und unlösbar verbunden wird, kann die Abstützung für den Schloßriegel nach Anspruch 3 direkt am Lagerteil vorgesehen sein. Dies ist vorteilhaft, da damit auch die Abstützung zur Vormontageeinheit aus Sperrkappe, Schloß und Lagerteil gehört und die Schloßeinstellung, insbesondere der Eingriff des Schloßriegels an der Abstützung, im Rahmen der Vormontage durchzuführen ist.

Nach Anspruch 4 wird die Klappachse des Scharniers zwischen Sperrkappe und Lagerteil vorteilhaft im unteren Bereich des Lagerteils mit waagrechter Querrichtung angeordnet. Damit klappt die Sperrkappe durch ihr Eigengewicht nach Öffnen des Schlosses nach unten und verbleibt in dieser Stellung, ohne bei Arbeiten an den Querträgerstirnseiten hinderlich zu sein. Anschließend wird die Sperrkappe einfach wieder nach oben geklappt und abgesperrt.

Mit den Merkmalen des Anspruchs 5 wird eine besonders einfache und kostengünstige Befestigungsmöglichkeit des Lagerteils nach dem Einschieben in den zugeordneten Längsschlitz angegeben. Dazu ist der Längsschlitz in einem Teilbereich durch eine Aussparung erweitert. Bevorzugt ist hier eine runde Öffnung, größer als die Schlitzbreite, anzubringen. In diese Aussparung bzw. runde Öffnung wird formschlüssig ein Sperrteil, bevorzugt in der Form einer Sperrscheibe, eingelegt, wobei diese in Richtung des Längsschlitzes nicht verschiebbar ist. Das Lagerteil enthält einen zur Querträgermitte hin offenen, waagrechten Aufnahmeschlitz, mit dem es über das Sperrteil bei der Montage schiebbar ist, so daß das Sperrteil auch in einer senkrechten Richtung zum Längsschlitz in der Aussparung durch die Wände des Aufnahmeschlitzes festgelegt ist. Die Schlitzwände sind durch das Sperrteil, bevorzugt durch ein Loch im Sperrteil, mit einer Niete miteinander verbunden. Damit ist das Lagerteil über das Sperrteil im Längsschlitz in Schlitzrichtung unlösbar fixiert. Eine solche Fixierung ist ersichtlich einfach, preisgünstig, dauerhaft und stabil durchführbar.

Damit das Sperrteil bzw. die Sperrscheibe beim Einschieben in die Aussparung am Längsschlitz nicht in das Hohlprofil hineinfällt, ist nach Anspruch 6 ein umlaufender Anlagerand als Montagehilfe vorgesehen.

Zur Anbringung am Kraftfahrzeug sind am Dachgepäckträger bzw. am Querträger lösbare Spanneinrichtungen angeordnet. Diese Spanneinrichtungen können in einer weiteren Ausgestaltung der Erfindung aus Abstützbacken und Spannbacken bestehen, die ebenfalls in den Längsträger (zur Querträgermitte hin) vor der Abdeckkappe eingeschoben sind. Eine so ausgebildete Spanneinrichtung, beispielsweise zur Befestigung an einer Dachreling, ist mit Hilfe eines Spannschraubenbolzens, der innerhalb des Querträgers in dessen Längsrichtung verläuft, betätigbar. Ein solcher Spannschraubenbolzen ist mit einem Schraubenzieher oder einem Sechskantschlüssel zu betätigen. Mit Anspruch 7 wird nun als Hilfe zum Einführen eines solchen Werkzeugs ein in Querträgerlängsrichtung verlaufender Führungskanal im Lagerteil vorgeschlagen, der bei weggeklappter Sperrkappe zugänglich ist und eine Werkzeugführung darstellt. Damit wird die Handhabung zum Anbringen und zur Abnahme des Dachgepäckträgers am Fahrzeug weiter verbessert.

Anhand einer Zeichnung wird ein Ausführungsbeispiel der Erfindung mit weiteren Einzelheiten, Merkmalen und Vorteilen näher erläutert.

Es zeigen
- Fig. 1: einen Querschnitt durch einen Querträger eines Dachgepäckträgers im seitlichen Bereich einer Abdeckkappenanordnung (Schnittlinie B-B aus Fig. 2),
- Fig. 2: einen Längsschnitt entlang der Linie A-A aus Fig. 1 und
- Fig. 3: eine Teilansicht der Unterseite des Querträgerprofils mit einem Längsschnitt und einer Sperrscheibe zum Befestigen eines Lagerteils.

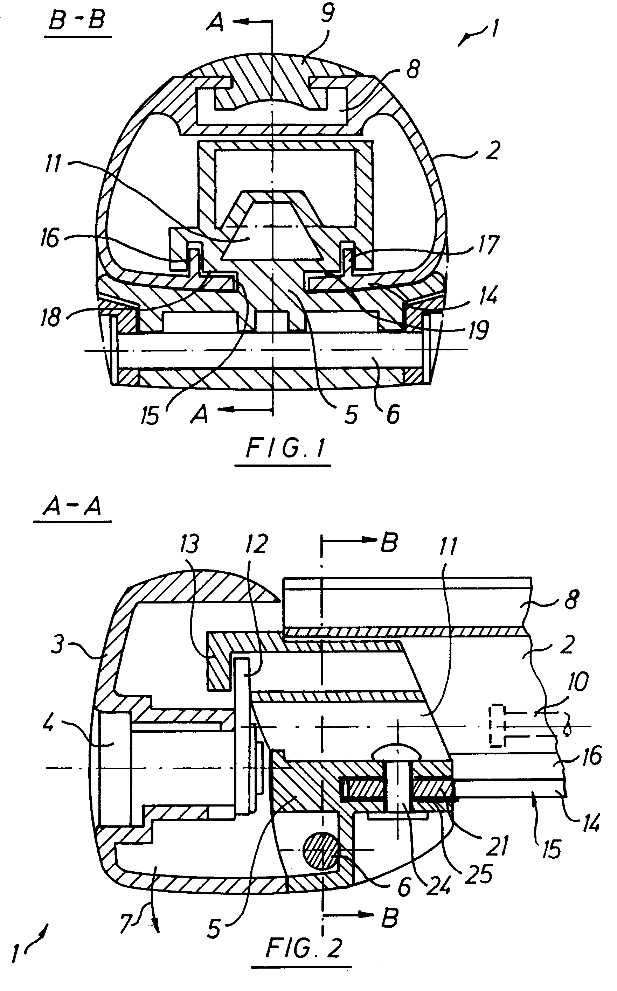

In den Fig. 1 und 2 sind ein Querschnitt und ein Längsschnitt einer Abdeckkappenanordnung 1 an einem Querträger 2 eines Dachgepäckträgers dargestellt. Die Abdeckkappenanordnung 1 besteht aus einer Sperrkappe 3, in der ein mit einem Schlüssel absperrbares Schloß 4 integriert ist und aus einem mit dem Querträger 2 verbundenen Lagerteil 5.

Das Lagerteil 5 und die Sperrkappe 3 sind über ein Scharnier mit einem Scharnierbolzen 6 klappbar verbunden, so daß die Sperrkappe 3 zusammen mit dem Schloß 4 nach unten (Pfeil 7) von der Stirnseite des Querträgers 2 weg geklappt werden kann. Der Scharnierbolzen 6 ist dazu in einem unteren Bereich des Lagerteils 5 angeordnet.

Das Profil des Querträgers 2 enthält abgerundete Seitenwände sowie einen nach oben offenen Längskanal 8 zur Aufnahme eines Gummiprofils 9 und/oder von Anbauteilen, wie Fahrrad- oder Bootshalter. Die Sperrkappe 3 ist so groß ausgelegt, daß sie im hochgeklappten und abgesperrten Zustand (Fig. 2) mit ihrem Oberteil die Stirnseite des Längskanals 8 abdeckt, so daß aus dem Längskanal keine Halterungen unbefugt entnommen werden können.

An den Seitenbereichen des Querträgers 2 sind in an sich bekannter Weise Halte- und Spannvorrichtungen zur Verbindung mit dem Fahrzeugdach angebracht, von denen schematisch lediglich ein Spann-Schraubenbolzen 10 eingezeichnet ist, wobei dieser in Querträgerlängsrichtung verläuft. Für die Anbringung des Dachgepäckträgers oder die Abnahme vom Fahrzeugdach ist dieser Spann-Schraubenbolzen 10 mit einem Werkzeug, z.B. einen Schraubenzieher oder einem Sechskant-Schlüssel, von der Stirnseite des Querträgers 2 her zu betätigen. Als Werkzeugführung ist hierzu im Lagerteil 5 ein entsprechender Führungskanal 11 in Richtung auf den Spann-Schraubenbolzen 10 eingeformt. Bei hochgeklappter und abgesperrter Sperrkappe 3 ist auch dieser Führungskanal 11 abgedeckt, so daß die Anordnung gegen eine unbefugte Abnahme des Dachgepäckträgers geschützt ist.

Das Schloß 4 enthält einen schwenkbaren Schloßriegel 12, der eine am Lagerteil 5 angebrachte Nase 13 als Abstützung im Sperrzustand hintergreift.

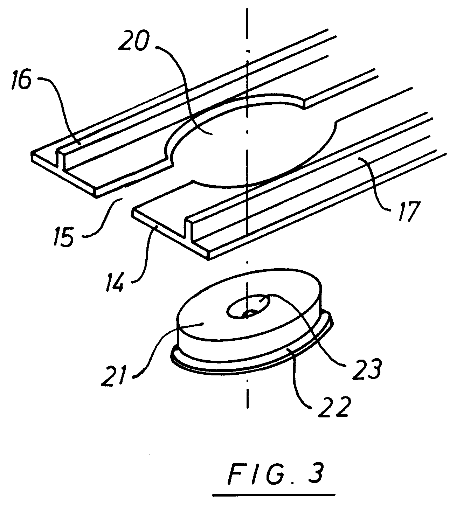

In Verbindung mit Fig. 3, die den seitlichen Endbereich der Unterseite 14 des Querträgerprofils darstellt, wird die Befestigung des Lagerteils 5 mit dem Querträger 2 erläutert:

An der Unterseite 14 ist ein zur Stirnseite hin offener Längsschlitz 15 angebracht mit Führungsrippen 16, 17 entlang und seitlich etwas versetzt zu den Längsrändern. Das Lagerteil 5 ist in den Längsschlitz 15 unterhalb des Längskanals 8 eingeschoben, wobei entsprechende Längsnuten 18, 19 vorgesehen sind, die auch die Führungsrippen 16, 17 aufnehmen und seitlich übergreifen. Dadurch wird der Längsschlitz 15 auch bei Belastungen zusammengehalten und gegen ein Aufweiten gesichert. Durch diese formschlüssige Verbindung ist das Lagerteil 5 in allen Profilquerrichtungen des Querträgers 2 stabil gehalten.

Zur Festlegung und unlösbaren Befestigung des Lagerteils 5 in der Einschubrichtung am Längsschlitz 15 ist dieser durch eine runde Öffnung 20 erweitert. In diese Öffnung 20 ist eine Sperrscheibe 21 formschlüssig eingelegt, die sich von unten her mit einem Anlagerand 22 an der Unterseite 14 abstützt und somit nicht in die Innenseite des Hohlprofils gelangen kann. Zudem enthält die Sperrscheibe 21 ein Befestigungsloch 23 zur Aufnahme einer Blindniete 24.

Das Lagerteil 5 ist mit einem zur Querträgermitte hin offenen, waagrechten Aufnahmeschlitz versehen, der mit einer unteren und oberen Wand über den Bereich der Öffnung 20 bzw. der Sperrscheibe 21 geschoben ist. Die Aufnahmeschlitzwände sind über die Blindniete 24 mit der Sperrscheibe 21 verbunden, die wegen ihrer größeren Ausdehnung gegenüber der Breite des Längsschlitzes 15 in Längsschlitzrichtung unverschiebbar festgelegt ist. Damit ist auch das Lagerteil 5 unverschiebbar im Längsschlitz 15 fixiert.

Die Einheit aus Sperrkappe 3, Schloß 4 und Lagerteil 5 bildet eine vormontierbare, zusammenhängende Baugruppe, die auf einfache Weise durch Einschieben und Anbringen der Blindniete 24 mit dem Querträger 2 verbunden werden kann. Mit der Abdeckkappenanordnung wird ein Schutz der offenen Stirnseite des Querträgers 2 und ein Diebstahlschutz erreicht, wobei die Sperrkappe 3 unverlierbar gehalten und einfach zu handhaben ist.

## Patentansprüche

1. Abdeckkappenanordnung am Querträger eines Dachgepäckträgers zur absperrbaren Abdeckung der jeweiligen Profilstirnseite,
mit je einer von der zugeordneten Profilstirnseite wegbewegbaren Sperrkappe,
mit einem Schloß, das in der Sperrkappe angeordnet ist und das mit einem Schloßriegel eine mit dem Querträger fest verbundene Abstützung hintergreift und
mit einem Querträger als Hohlprofil, der einen nach oben offenen Längskanal mit Hinterschneidungen zur Aufnahme von Anbauteilen enthält und der seitliche Halte- und Spanneinrichtungen aufweist,
dadurch gekennzeichnet,
daß jeweils weiter ein Lagerteil (5) verwendet ist, das mit dem Querträger (2) verbunden ist,
daß die Sperrkappe (3) mit dem Schloß (4) und das Lagerteil (5) eine vormontierbare, zusammenhängende Montageeinheit bilden,
daß die Sperrkappe (3) mit dem Lagerteil (5) über ein Scharnier (6) verbunden ist und damit vor die Profilstirnseite bzw. von dieser weg klappbar ist,
daß der Querträger (2) in seinem Hohlprofil je einen an seiner Unterseite (14) und in jedem Endbereich angeordneten, zur Stirnseite offenen Längsschlitz (15) aufweist,
daß das Lagerteil (5) seitliche Längsnuten (18, 19) aufweist, mit denen es in den zugeordneten Längsschlitz (15) unter dem Längskanal (8) eingeschoben ist und in die die Längsränder des Längsschlitzes (15) eingreifen und das Lagerteil (5) gegen ein Herausziehen mit Haltemitteln (21, 24) gesichert ist.

2. Abdeckkappenanordnung nach Anspruch 1, dadurch gekennzeichnet, daß die Längsränder des jeweiligen Längsschlitzes (15) Führungsrippen (16, 17) aufweisen, die zur Hohlprofilinnenseite bzw. nach oben abstehen und daß die Längsnuten (18, 19) am Lagerteil (5) mit einem entsprechenden, negativen Längsnutenprofil die Führungsrippen (16, 17) aufnehmen und übergreifen.

3. Abdeckkappenanordnung nach Anspruch 1 oder 2, dadurch gekennzeichnet, daß die Abstützung (13) für den Schloßriegel (12) am Lagerteil (5) angebracht ist.

4. Abdeckkappenanordnung nach einem der Ansprüche 1 bis 3, dadurch gekennzeichnet, daß die Klappachse (Scharnierbolzen 6) des Scharniers zwischen Sperrkappe (3) und Lagerteil (5) im unteren Bereich des Lagerteils (5) mit waagrechter Querrichtung angeordnet ist.

5. Abdeckkappenanordnung nach einem der Ansprüche 1 bis 4, dadurch gekennzeichnet,
daß der Längsschlitz (15) in einem Teilbereich durch eine Aussparung, bevorzugt durch eine runde Öffnung (20), erweitert ist,
daß in die Aussparung bzw. in die runde Öffnung (20) formschlüssig ein Sperrteil, bevorzugt eine Sperrscheibe (21), einlegbar ist,
daß das Lagerteil (5) einen zur Querträgermitte hin offenen, waagrechten Aufnahmeschlitz (25) aufweist, mit dem es über das Sperrteil bzw. die Sperrscheibe (21) bei der Montage schiebbar ist und
daß die Schlitzwände durch das Sperrteil bzw. die Sperrscheibe (21) bevorzugt über eine Niete (24) miteinander verbunden sind, so daß das Lagerteil (5) über das Sperrteil (21) als Haltemittel gegen ein Herausziehen aus dem Längsschlitz (15) gesichert ist.

6. Abdeckkappenanordnung nach Anspruch 5, dadurch gekennzeichnet, daß das Sperrteil bzw. die Sperrscheibe (21) einen umlaufenden Anlagerand (22) aufweist.

7. Abdeckkappenanordnung nach einem der Ansprüche 1 bis 6, dadurch gekennzeichnet, daß das Lagerteil (5) einen bei weggeklappter Sperrkappe (3) zugänglichen, in Querträger-Längsrichtung verlaufenden Führungskanal (11) enthält, der auf eine weiter innen im Querträger (2) liegende Spannschraube (10) für eine Halte- und Spanneinrichtung hin gerichtet ist.

## Claims

1. A cap device on the cross bar of a roof rack for the lockable covering of the respective end side of the section,
with one locking cap each that is removable from the associated end side of the section,
with a lock that is arranged in the locking cap and which engages with a lock bolt behind a support rigidly joined to the cross bar and
with a cross bar as a hollow section which comprises a longitudinal channel that is open towards the top, with undercuts for receiving attachments, and which has lateral holding and clamping devices,
characterized in that
in each case there is, moreover, used a supporting member (5) which is connected to the cross bar (2),
that the locking cap (3) with the lock (4) and the supporting member (5) form a coherent assembly unit that can be preassembled,
that the locking cap (3) is joined to the supporting member (5) by means of a hinge (6) and can be moved thereby in front of the end side of the section, or be moved away therefrom,
that the cross bar (2) has in its hollow profile one longitudinal slot (15) each, which is arranged at its bottom (14) and in each end zone, and is open towards the end side,
that the supporting member (5) has lateral longitudinal grooves (18, 19) by means of which it is inserted into the associated longitudinal slot (15) beneath the longitudinal channel (8) and wherein there engage the longitudinal edges of the longitudinal slot (15), and the supporting member (5) is secured against extraction by holding means (21, 24).

2. A cap device according to claim 1, characterized in that the longitudinal edges of the respective longitudinal slot (15) have guide ribs (16, 17) which project towards the inside of the hollow section or towards the top, and that the longitudinal grooves (18, 19) on the supporting member (5) receive and engage over the guide grooves (16, 17) with a corresponding negative longitudinal groove profile.

3. A cap device according to claim 1 or 2, characterized in that the support (13) for the lock bolt (12) is arranged on the supporting member (5).

4. A cap device according to one of claims 1 to 3, characterized in that the articulation pin (the hinge pin 6) of the hinge is arranged between the locking cap (3) and the supporting member (5) in the lower zone of the supporting member (5) in a horizontal transverse direction.

5. A cap device according to one of claims 1 to 4,
characterized in that
the longitudinal slot (15) is enlarged in a part zone by a cutout, preferably by a round opening (20),
that a locking component, preferably a locking disk (21) is insertable with a form-fit into the cutout or into the round opening (20),
that the supporting member (5) has a horizontal receiving slot (25) that is open towards the centre of the cross bar, wherewith it can be pushed over the locking component or the locking disk (21) during assembly and
that the sides of the slot are joined to each other through the locking component or locking disk (21), preferably by means of a rivet (24), so that the supporting member (5) is secured against extraction from the longitudinal slot (15) by means of the locking component (21) as the holding means.

6. A cap device according to claim 5, characterized in that the locking component or locking disk (21) has a peripheral bearing rim (22).

7. A cap device according to one of claims 1 to 6, characterized in that the supporting member (5) comprises a guide channel (11) which is accessible when the locking cap has been tilted away and extends in the longitudinal direction of the cross bar, which channel is directed towards a clamping screw (10), lying further inside the cross bar (2), for a holding and clamping device.

## Revendications

1. Dispositif à capuchons de recouvrement pour la barre transversale d'un porte-bagages de toit, pour recouvrir, avec possibilité de blocage, chaque face d'extrémité du profilé, comprenant
un capuchon de fermeture qui peut être enlevé de la face d'extrémité associée du profilé,
une serrure qui est disposée dans le capuchon de fermeture et qui s'agrippe, par un pêne, derrière un élément d'appui solidaire de la barre transversale, et
une barre transversale sous forme de profilé creux, qui contient une gorge longitudinale ouverte vers le haut, avec des contre-dépouilles pour recevoir des accessoires, et qui comporte des dispositifs latéraux de maintien et de serrage,
caractérisé en ce qu'il est utilisé en outre un élément de montage (5) qui est fixé à la barre transversale (2),
en ce que le capuchon de fermeture (3) forme, avec la serrure (4) et l'élément de montage (5), un sous-ensemble de montage cohérent pouvant être préassemblé,
en ce que le capuchon de fermeture (3) est relié à l'élément de montage (5) par une charnière (6) et peut ainsi basculer entre une position où il est devant la face d'extrémité du profilé et une position où il est écarté de cette face d'extrémité,
en ce que la barre transversale (2) présente, dans son profil creux, une fente longitudinale (15) qui est formée, du côté de sa face inférieure (14), dans chaque région d'extrémité et qui est ouverte vers la face d'extrémité, et
en ce que l'élément de montage (5) présente des rainures longitudinales latérales (18, 19) par lesquelles il est introduit en glissant dans la fente longitudinale (15) associée, au-dessous de la gorge longitudinale (8), et dans lesquelles s'engagent les bords longitudinaux de la fente longitudinale (15), l'élément de montage (5) étant assujetti contre son extraction par des moyens de retenue (21, 24).

2. Dispositif à capuchon de recouvrement selon la revendication 1, caractérisé en ce que les bords longitudinaux de chaque fente longitudinale (15) présentent des nervures de guidage (16, 17) qui s'étendent vers l'intérieur du profilé creux, c'est-à-dire vers le haut, et en ce que les rainures longitudinales (18, 19) de l'élément de montage (5) reçoivent et chevauchent ces nervures longitudinales (16, 17) grâce à un profil inverse correspondant desdites rainures longitudinales.

3. Dispositif à capuchon de recouvrement selon la revendication 1 ou 2, caractérisé en ce que l'élément d'appui (13) pour le pêne (12) de la serrure est située sur l'élément de montage (5).

4. Dispositif à capuchon de recouvrement selon l'une quelconque des revendications 1 à 3, caractérisé en ce l'axe de basculement (axe de charnière 6) de la charnière entre le capuchon de fermeture (3) et l'élément de montage (5) est disposé dans la région inférieure de l'élément de montage (5) et s'étend en direction horizontale et transversale.

5. Dispositif à capuchon de recouvrement selon l'une quelconque des revendications 1 à 4, caractérisé
en ce que la fente longitudinale (15) est élargie localement par un évidement, de préférence par une ouverture ronde (20),
en ce qu'un élément de blocage, de préférence un disque de blocage (21), peut être encastré dans l'évidement ou ouverture ronde (20),
en ce que l'élément de montage (5) présente une fente de logement horizontale (25) qui est ouverte vers le milieu de la barre transversale et par laquelle il peut être glissé sur l'élément de blocage ou disque de blocage (21) lors du montage, et
en ce que les parois de la fente sont reliées l'une à l'autre, à travers l'élément de blocage ou disque de blocage (21), de préférence au moyen d'un rivet (24), de sorte que l'élément de montage (5) soit assujetti contre son extraction de la fente longitudinale (15) au moyen de l'élément de blocage (21) servant de moyen de retenue.

6. Dispositif à capuchon de recouvrement selon la revendication 5, caractérisé en ce que l'élément de blocage ou disque de blocage (21) présente un rebord périphérique d'appui (22).

7. Dispositif à capuchon de recouvrement selon l'une quelconque des revendications 1 à 6, caractérisé en ce que l'élément de montage (5) contient un passage de guidage (11) qui s'étend dans la direction longitudinale de la barre transversale, est accessible lorsque le capuchon de fermeture (3) est basculé en position d'ouverture, et est dirigé vers une vis de serrage (10) située plus loin vers l'intérieur dans la barre transversale (2) et faisant partie d'un dispositif de maintien et de serrage.
